# EUROPEAN PATENT APPLICATION

(11) **EP 4 624 364 A1**
(43) Date of publication of application: **01.10.2025**
(21) Application number: 23907760.5
(22) Date of filing: 20.12.2023
(51) Int. Cl.: B65D 81/05, B65D 71/70, B65D 88/02, B08B 11/02, H01M 50/107, H01M 50/213, H01M 50/249

(54) **CARRIER FOR CLEANING CYLINDRICAL BATTERY CELL, CYLINDRICAL BATTERY CELL PRODUCED USING SAME, AND BATTERY PACK AND VEHICLE WHICH COMPRISE CYLINDRICAL BATTERY CELL**

(30) Priority: 20.12.2022 KR 20220179856; 05.12.2023 KR 20230174881
(71) Applicant: LG Energy Solution, Ltd., Seoul 07335 (KR)
(72) Inventor: LEE, Gi-Yeon, Daejeon 34122 (KR); KIM, Tae-Heon, Daejeon 34122 (KR); LEE, Gil-Young, Daejeon 34122 (KR)
(74) Representative: Goddar, Heinz J.
(86) International application number: PCT/KR2023/021159
(87) International publication number: WO 2024/136477

(57) **Abstract**

Disclosed are a cylindrical battery cell cleaning carrier, a cylindrical battery cell produced using the same, and a battery pack and a vehicle including the cylindrical battery cell. A cylindrical battery cell cleaning carrier according to an embodiment of the present disclosure, which is a carrier where the cylindrical battery cell is seated during the transfer process to a cleaning member for cleaning the cylindrical battery cell, includes a body portion in which the cylindrical battery cell is seated; a first support portion protruding from the body portion and supporting the side surface of the cylindrical battery cell; and a second support portion protruding from the body portion and supporting the bottom surface of the cylindrical battery cell.

## Description

### TECHNICAL FIELD

The present application claims priority to Korean Patent Application No. 10-2022-0179856 filed on December 20, 2022 and Korean Patent Application No. 10-2023-0174881 filed on December 5, 2023 in the Republic of Korea, the disclosures of which are incorporated herein by reference.

The present disclosure relates to a cylindrical battery cell cleaning carrier, a cylindrical battery cell produced using the same, and a battery pack and a vehicle including the cylindrical battery cell, and more specifically, to a cylindrical battery cell cleaning carrier capable of uniformly cleaning a cylindrical battery cell, a cylindrical battery cell produced using the same, and a battery pack and a vehicle including the cylindrical battery cell.

### BACKGROUND ART

Secondary batteries have high applicability according to product groups and electrical characteristics such as high energy density, and thus are commonly applied not only to portable devices but also to electric vehicles (EVs) or hybrid electric vehicles (HEVs) driven by electric power sources.

Such secondary batteries are attracting attention as a new energy source to improve eco-friendliness and energy efficiency in that it has not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries, and the like. An operating voltage of this unit secondary battery cell is about 2.5 V to 4.5 V.

Therefore, when a higher output voltage is required, a plurality of battery cells may be connected in series to configure a battery module or a battery pack. In addition, depending on the demanded charge/discharge capacity, a plurality of battery cells may also be connected in parallel to configure a battery module or a battery pack. Thus, the number and electrical connection type of battery cells included in the battery module or the battery pack may be variously set depending on at least one of the required output voltage and the demanded charge/discharge capacity.

Meanwhile, cylindrical, prismatic, and pouch-type battery cells are known as types of secondary battery cells. In the case of a cylindrical battery cell, a separator, which is an insulator, is interposed between the positive electrode plate and the negative electrode plate and wound to form a jelly roll-shaped electrode assembly, which is then inserted into a battery can together with an electrolyte to form a battery. And, in the cylindrical battery cell, a current collector plate may be used to electrically connect the positive electrode plate and the negative electrode plate, respectively.

A cylindrical battery cell goes through various processes in the production process, and particularly, a cleaning process is performed by a cleaning member. Here, the cylindrical battery cell is cleaned by the cleaning member while being seated in the carrier and transferred.

However, in the prior art, when water is sprayed from the cleaning member, the cylindrical battery cell moves inside the carrier due to water pressure, and accordingly, there is a problem of uneven cleaning.

### DISCLOSURE

### Technical Problem

The present disclosure is designed to solve the problems of the related art, and therefore the present disclosure is directed to providing a cylindrical battery cell cleaning carrier in which movement of the cylindrical battery cell may be prevented after being seated in the carrier, a cylindrical battery cell produced using the same, and a battery pack and a vehicle including the cylindrical battery cell.

The present disclosure is also directed to providing a cylindrical battery cell cleaning carrier that may be cleaned uniformly by preventing movement of the cylindrical battery cell within the carrier, a cylindrical battery cell produced using the same, and a battery pack and a vehicle including the cylindrical battery cell.

However, technical problems to be solved by the present disclosure are not limited to the above-described problems, and other problems not mentioned herein may be clearly understood by those skilled in the art from the following description of the present disclosure.

### Technical Solution

According to one aspect of the present disclosure, there may be provided a cylindrical battery cell cleaning carrier, which is a carrier where the cylindrical battery cell is seated during the transfer process to a cleaning member for cleaning the cylindrical battery cell, including a body portion in which the cylindrical battery cell is seated; a first support portion protruding from the body portion and supporting the side surface of the cylindrical battery cell; and a second support portion protruding from the body portion and supporting the bottom surface of the cylindrical battery cell.

In an embodiment, at least one of the first support portions may protrude from the side surface of an inner circumferential portion of the body portion.

In an embodiment, the first support portion may be provided in four, and the four first support portions may be spaced apart from each other at an interval of 90 degrees.

In an embodiment, an inclined portion may be formed on an upper side of the first support portion to facilitate seating of the cylindrical battery cell.

In an embodiment, at least one of the second support portions may protrude from the lower side of an inner circumferential portion of the body portion.

In an embodiment, the second support portion may be coupled to the lower end of the first support portion.

In an embodiment, the second support portion may be provided in four, and the four second support portions may be spaced apart from each other at an interval of 90 degrees.

In an embodiment, a round portion may be formed in the second support portion so as to facilitate the discharge of cleaning water used for cleaning the cylindrical battery cell.

In an embodiment, the round portion may be formed on the upper surface of the second support portion.

In an embodiment, the round portion may include a first curved portion formed in a curved shape from a first end of the upper surface toward the center of the upper surface; and a second curved portion formed in a curved shape from a second end of the upper surface opposite to the first end toward the center of the upper surface, wherein a straight portion in the form of a straight line connected to the first curved portion and the second curved portion, respectively, may be formed at the center of the upper surface.

In an embodiment, the second support portion may include a plurality of unit supports, wherein the plurality of unit supports may be spaced apart from each other so as to facilitate the discharge of cleaning water used for cleaning the cylindrical battery cell, and a drain may be formed in the spaced apart space of the plurality of unit supports.

In an embodiment, the first support portion may be provided with a gap removal portion to remove the gap between the first support portion and the cylindrical battery cell.

In an embodiment, the gap removal portion may include an elastic portion coupled to the first support portion; and a contact support portion coupled to the elastic portion and contacting the side surface of the cylindrical battery cell.

Meanwhile, according to another aspect of the present disclosure, there may be provided a cylindrical battery cell produced using the cylindrical battery cell cleaning carrier described above, there may also be provided a battery pack including at least one cylindrical battery cell described above, and there may also be provided a vehicle including at least one cylindrical battery cell described above.

### Advantageous Effects

Embodiments of the present disclosure have the effect of preventing movement of the cylindrical battery cell after being seated in the carrier.

In addition, since the movement of the cylindrical battery cell within the carrier is prevented, there is an effect that cleaning may be made uniform.

However, the effects to be obtained by the present disclosure are not limited to the above-described effects, and other technical effects not mentioned herein may be clearly understood by those skilled in the art from the following description of the present disclosure.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is a perspective view of a state before a cylindrical battery cell is seated in a cylindrical battery cell cleaning carrier according to an embodiment of the present disclosure.
FIG. 2 is a perspective view of a state in which a cylindrical battery cell is seated in a cylindrical battery cell cleaning carrier in FIG. 1.
FIG. 3 is a cross-sectional view of FIG. 2.
FIG. 4 is a perspective view of a state in which a cylindrical battery cell is removed from a cylindrical battery cell cleaning carrier according to an embodiment of the present disclosure.
FIGS. 5 is a plan view of a cylindrical battery cell cleaning carrier according to an embodiment of the present disclosure.
FIG. 6 is a perspective view seen from the bottom surface of a cylindrical battery cell cleaning carrier according to an embodiment of the present disclosure.
FIG. 7 is a cross-sectional view taken along line A-A' in FIG. 4.
FIG. 8 is a cross-sectional view according to one modified embodiment of a cylindrical battery cell cleaning carrier according to an embodiment of the present disclosure.
FIG. 9 is a partially cutaway perspective view according to another modified embodiment of a cylindrical battery cell cleaning carrier according to an embodiment of the present disclosure.
FIG. 10 is a cross-sectional view according to still another modified embodiment of a cylindrical battery cell cleaning carrier according to an embodiment of the present disclosure.
FIG. 11 is view schematically showing the configuration of a battery pack including cylindrical battery cells produced using a cylindrical battery cell cleaning carrier according to each embodiment of the present disclosure.
FIG. 12 is a view for describing a vehicle including the battery pack of FIG. 11.

### BEST MODE

Hereinafter, preferred embodiments of the present disclosure will be described in detail with reference to the accompanying drawings. The terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the embodiments described in this specification and the configurations shown in the drawings are only one of the most preferred embodiments of the present disclosure, not intended to entirely represent the technical aspects of the present disclosure, so it should be understood that various equivalents and modifications may be made thereto at the time of filing the present application.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

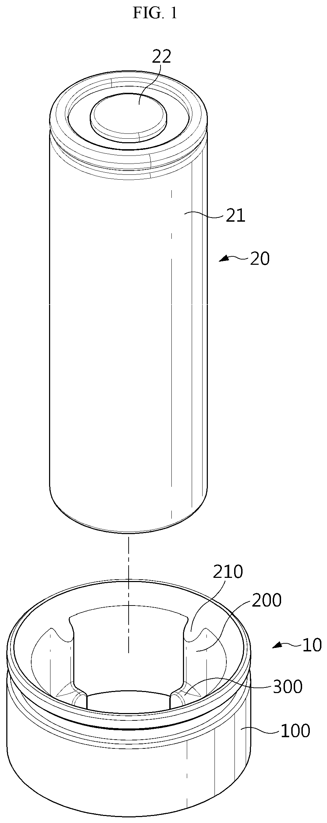

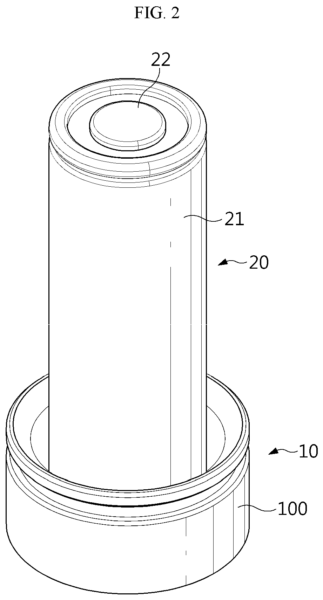

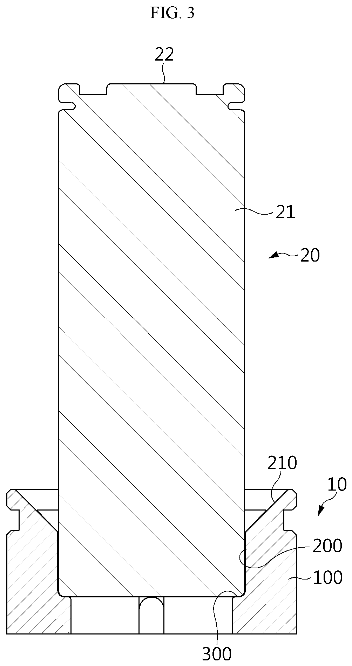

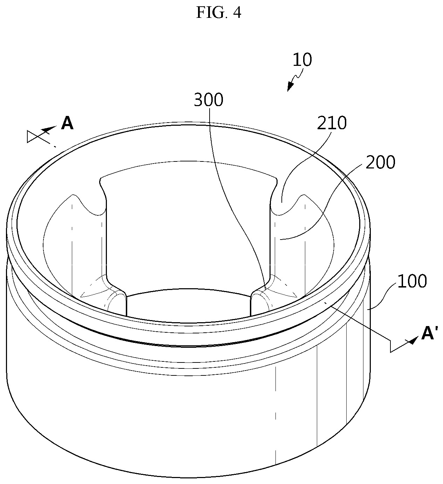

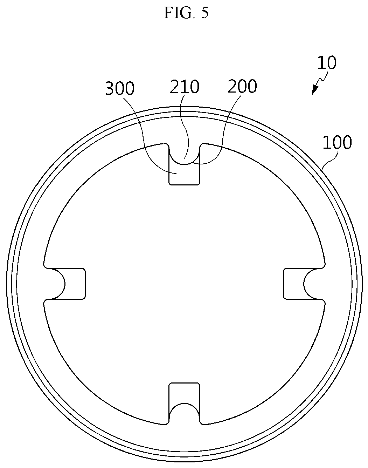

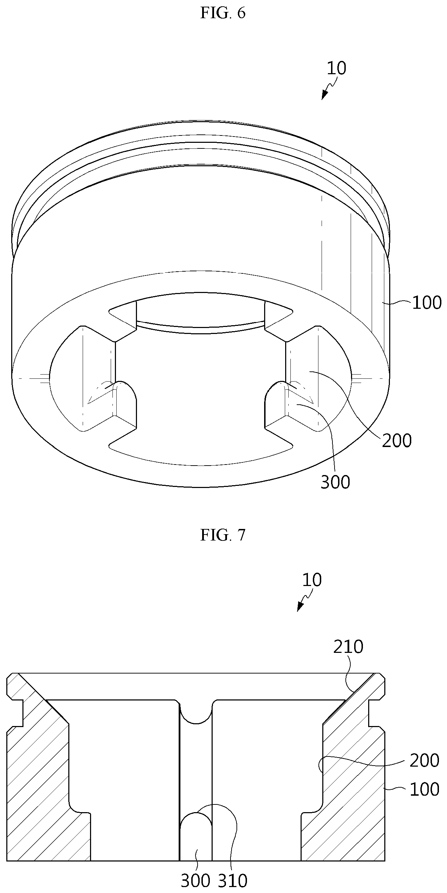

FIG. 1 is a perspective view of a state before a cylindrical battery cell is seated in a cylindrical battery cell cleaning carrier according to an embodiment of the present disclosure, FIG. 2 is a perspective view of a state in which a cylindrical battery cell is seated in a cylindrical battery cell cleaning carrier in FIG. 1, FIG. 3 is a cross-sectional view of FIG. 2, FIG. 4 is a perspective view of a state in which a cylindrical battery cell is removed from a cylindrical battery cell cleaning carrier according to an embodiment of the present disclosure, FIGS. 5 is a plan view of a cylindrical battery cell cleaning carrier according to an embodiment of the present disclosure, FIG. 6 is a perspective view seen from the bottom surface of a cylindrical battery cell cleaning carrier according to an embodiment of the present disclosure, and FIG. 7 is a cross-sectional view taken along line A-A' in FIG. 4.

Referring to FIG. 1, a cylindrical battery cell cleaning carrier 10 (hereinafter simply referred to as a cleaning carrier) according to an embodiment of the present disclosure is a carrier in which a cylindrical battery cell 20 is seated during the transfer process to a cleaning member (not shown) for cleaning the cylindrical battery cell 20.

The cylindrical battery cell 20 may include an electrode assembly (not shown), a battery can 21, and a cap plate (not shown).

The electrode assembly has a structure in which a positive electrode plate, a negative electrode plate, and a separator interposed between the positive electrode plate and the negative electrode plate are wound in one direction. And, a center hole is formed in the center of the electrode assembly and the electrode assembly may be formed in a jelly roll type.

For example, the electrode assembly may be manufactured by winding a laminate formed by sequentially stacking a negative electrode plate, a separator, a positive electrode plate, and a separator at least once. Here, the positive electrode plate and the negative electrode plate may be formed in a sheet shape.

That is, the electrode assembly applied to this embodiment may be a winding type electrode assembly. In this case, an additional separator may also be provided on the outer circumferential surface of the electrode assembly for insulation from the battery can 21. That is, the electrode assembly may have a winding structure well known in the related art without limitation.

A positive electrode active material may be applied to one or both sides of the positive electrode plate, and a first uncoated portion to which no positive electrode active material is applied may be formed at an end of the positive electrode plate. The first uncoated portion is exposed to the outside of the separator while forming a plurality of winding turns around the center of the electrode assembly, and may itself be used as an electrode tab. However, the first uncoated portion may not be formed on the positive electrode plate.

A negative electrode active material may be applied to one or both sides of the negative electrode plate, and a second uncoated portion to which no negative electrode active material is applied may be formed at an end of the negative electrode plate. The second uncoated portion is exposed to the outside of the separator while forming a plurality of winding turns around the center of the electrode assembly, and may itself be used as an electrode tab. However, the second uncoated portion may not be formed on the negative electrode plate.

Here, when the positive electrode plate and the negative electrode plate each include an uncoated portion, the first uncoated portion and the second uncoated portion may be configured to face opposite directions.

And, the positive electrode active material coated on the positive electrode plate and the negative electrode active material coated on the negative electrode plate may be used without limitation so long as they are active materials known in the art.

The separator may be a porous polymer film, for example, a porous polymer film made of a polyolefin-based polymer such as ethylene homopolymer, propylene homopolymer, ethylene/butene copolymer, ethylene/hexene copolymer, and ethylene/ methacrylate copolymer, either alone or in a stacked structure thereof.

As another example, the separator may be a conventional porous nonwoven fabric, for example, a nonwoven fabric made of high melting point glass fiber, polyethylene terephthalate fiber, and the like.

At least one surface of the separator may include a coating layer of inorganic particles. In addition, the separator itself may be formed of a coating layer of inorganic particles. The particles constituting the coating layer may have a structure coupled to a binder so that an interstitial volume exists between adjacent particles.

And, the center hole of the electrode assembly is also used for welding the cell terminal 22 (positive electrode terminal) and the positive electrode current collector plate. That is, it may be configured to weld the cell terminal 22 and the positive electrode current collector plate by irradiating a laser through the center hole of the electrode assembly.

An electrode assembly is accommodated in the battery can 21. And, a through hole may be formed in the battery can 21. Here, the battery can 21 is formed in a cylindrical shape such that the electrode assembly is accommodated inside the battery can 21 and may be electrically connected to the negative electrode plate of the electrode assembly. Accordingly, the battery can 21 may have the same polarity as the negative electrode plate, that is, the negative electrode.

The diameter of the battery can 21 is formed to be larger than the diameter of the electrode assembly. A gap of a preset size is formed between the battery can 21 and the positive electrode current collector plate, and an insulator may be interposed between the gap.

If the size of the battery can 21 is set according to the standard and then the size of the electrode assembly is increased, the overall capacity of the battery cell increases, but the gap between the battery can 21 and the electrode assembly decreases.

That is, since increasing the size of the electrode assembly to increase the overall capacity of the battery cell reduces the gap between the battery can 21 and the electrode assembly, the insulator should be able to be interposed between the reduced gap of the battery can 21 and the electrode assembly to increase the capacity of the battery cell, and to this end, the thickness of the insulator is preferably as thin as possible.

A battery can 21 is an approximately cylindrical receptor, which may be made of a conductive material such as metal, for example. The material of the battery can 21 may be made of a conductive metal, such as aluminum, steel, stainless steel, or the like, but is not limited thereto.

The positive electrode current collector plate is electrically connected to the positive electrode plate, for example, at the top of the electrode assembly. For example, the positive electrode current collector plate is made of a conductive metal material and may be electrically connected to the first uncoated portion of the positive electrode plate.

The cell terminal 22 is made of a conductive metal material and is electrically connected to the positive electrode current collector plate. And, the cell terminal 22 is electrically connected to the positive electrode plate of the electrode assembly through the positive electrode current collector plate, and has a positive polarity.

That is, the cell terminal 22 may function as a positive electrode terminal. And, the battery can 21 is electrically connected to the negative electrode plate of the electrode assembly as described above, and has a negative polarity.

The negative electrode current collector plate is electrically connected to the negative electrode plate, for example, at the bottom of the electrode assembly. For example, the negative electrode current collector plate is made of a conductive metal material such as aluminum, steel, copper, nickel, or the like and may be electrically connected to the second uncoated portion of the negative electrode plate.

The negative electrode current collector plate may be electrically connected to the battery can 21. To this end, the negative electrode current collector plate may be secured with at least a portion of its edge part interposed between the inner surface of the battery can 21 and the sealing gasket.

In an embodiment, at least a portion of the edge part of the negative electrode current collector plate may be secured to the beading portion by welding while being supported on the bottom surface of the beading portion formed at the bottom of the battery can 21.

And, at least a portion of the remaining part except for the coupling part of the beading portion of the negative electrode current collector plate may be coupled to the bent surface of the second uncoated portion by welding, for example, laser welding.

In addition, at least a portion of the edge of the negative electrode current collector plate may be electrically coupled to a surface adjacent to the clamping portion among the upper and lower surfaces of the beading portion.

The cap plate is configured to seal an opening formed at the bottom of the battery can 21. The cap plate may be made of, for example, a metal material to ensure rigidity.

And, the cap plate may be separated from the electrode assembly and provided to be non-polar. That is, the cap plate may not have a polarity even when it is made of a conductive metal material.

The fact that the cap plate has no polarity means that the cap plate is electrically insulated from the battery can 21 and cell terminals 22. As such, the cap plate need not be polarized, and its material does not necessarily have to be a conductive metal.

The cap plate may be supported by being seated on a beading portion formed on the battery can 21. In addition, the cap plate is secured by a clamping portion to be described later. A sealing gasket may be interposed between the cap plate and the clamping portion of the battery can 21 to ensure airtightness of the battery can 21. That is, the sealing gasket may be provided to be interposed between the edge of the cap plate and the opening of the battery can 21.

The cleaning member (not shown) may be variously configured to clean the cylindrical battery cell 20, and may include, for example, a nozzle that sprays water toward the cylindrical battery cell 20. That is, the cleaning member (not shown) may be configured to spray water, for example, toward the cylindrical battery cell 20 that is seated in the cleaning carrier 10 and transferred.

Here, when the cylindrical battery cell 20 is made to move by water pressure sprayed from the cleaning member (not shown), cleaning may become uneven, but the cylindrical battery cell cleaning carrier 10 according to an embodiment of the present disclosure may solve this problem.

Referring to FIG. 1, the cylindrical battery cell cleaning carrier 10 according to an embodiment of the present disclosure includes a body portion 100, a first support portion 200, and a second support portion 300.

A cylindrical battery cell 20 is seated in the body portion 100 (see FIG. 2). The body portion 100 may have various shapes, for example, may be formed in a cylindrical shape, but is not limited thereto.

Referring to FIGS. 1 and 4, the first support portion 200 protrudes from the body portion 100 and supports the side surface of the cylindrical battery cell 20 as shown in FIG. 3.

The first support portion 200 may be configured in various shapes, and for example, at least one of the first support portions 200 may protrude from the side surface of an inner circumferential portion of the body portion 100. Referring to FIG. 5, the first support portion 200 may be provided in four, and the four first support portions 200 may be formed to be spaced apart from each other at an interval of 90 degrees. However, the number and interval of the first support portions 200 are not limited thereto.

And, referring to FIG. 1, an inclined portion 210 may be formed on an upper side of the first support portion 200 to facilitate seating of the cylindrical battery cell 20. Even if the cylindrical battery cell 20 deviates slightly from the exact center during the process of being seated in the body portion 100, the lower side of the cylindrical battery cell 20 may contact the inclined portion 210 and slide to be positioned at the exact center.

The second support portion 300 protrudes from the body portion 100 and supports the bottom surface of the cylindrical battery cell 20 as shown in FIG. 3.

At least one of the second support portions 300 may protrude from the lower side of an inner circumferential portion of the body portion 100. And, referring to FIGS. 1 and 6, the second support portion 300 may be coupled to the lower end of the first support portion 200.

Referring to FIG. 5, the second support portion 300 may be provided in four, and the four second support portions 300 may be formed to be spaced apart from each other at an interval of 90 degrees. However, the number and interval of the second support portions 300 are not limited thereto.

Here, referring to FIG. 7, a round portion 310 may be formed in the second support portion 300 to facilitate the discharge of cleaning water used for cleaning the cylindrical battery cell 20. For example, the round portion 310 may be formed on the upper surface of the second support portion 300. That is, water sprayed from the nozzle of the cleaning member (not shown) may move downward along the round portion 310 of the second support portion 300.

As a result, the cylindrical battery cell cleaning carrier 10 according to an embodiment of the present disclosure may not only prevent movement of the cylindrical battery cell 20 during cleaning thereof, but also have the effect of facilitating drainage of water used for cleaning the cylindrical battery cell 20.

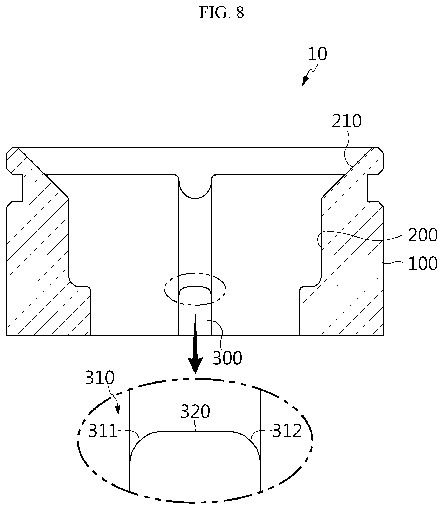

FIG. 8 is a cross-sectional view according to one modified embodiment of a cylindrical battery cell cleaning carrier according to an embodiment of the present disclosure.

Referring to FIG. 8, the round portion 310 may be configured to include a first curved portion 311 and a second curved portion 312. The first curved portion 311 may be formed in a curved shape from a first end of the upper surface of the second support portion 300 toward the center of the upper surface. And, the second curved portion 312 may be formed in a curved shape from a second end of the upper surface opposite to the first end toward the center of the upper surface. And, a straight portion 320 in the form of a straight line connected to the first curved portion 311 and the second curved portion 312, respectively, may be formed at the center of the upper surface.

In this way, when the straight portion 320 is formed at the center of the upper surface of the second support portion 300, the cylindrical battery cell 20 may be stably seated and supported, and there is also an effect of facilitating drainage of water used for cleaning the cylindrical battery cell 20 by the first curved portion 311 and the second curved portion 312 connected to the straight portion 320, respectively.

The contents common to those described in FIGS. 1 to 7 may also be applied to the embodiment of FIG. 8.

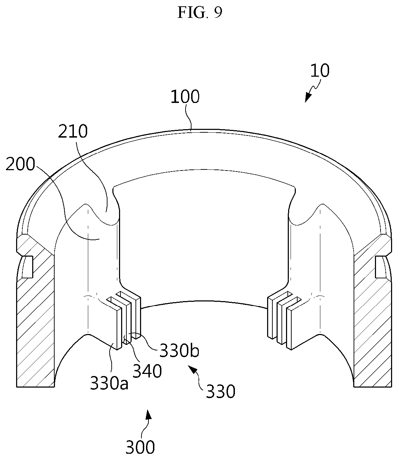

FIG. 9 is a partially cutaway perspective view according to another modified embodiment of a cylindrical battery cell cleaning carrier according to an embodiment of the present disclosure.

Referring to FIG. 9, the second support portion 300 may include a plurality of unit supports 330a, 330b. Here, the unit support 330 may have a thin plate shape. The plurality of unit supports 330a, 330b are spaced apart from each other, and a drain 340 may be formed in the spaced apart space of the plurality of unit supports 330a, 330b, that is, the space between the plurality of unit supports 330a, 330b. And, the cleaning water used for cleaning the cylindrical battery cell 20 may be easily discharged through the drain 340 formed between the plurality of unit supports 330a, 330b.

The contents common to those described in FIGS. 1 to 7 or the contents common to those described in FIG. 8 may also be applied to the embodiment of FIG. 9. For example, a round portion 310 may be formed on the upper surface of the unit support 330 of FIG. 9, or a curved portion and a straight portion 320 may be formed together. Alternatively, the upper surface of the unit support 330 of FIG. 9 may be formed with only straight lines.

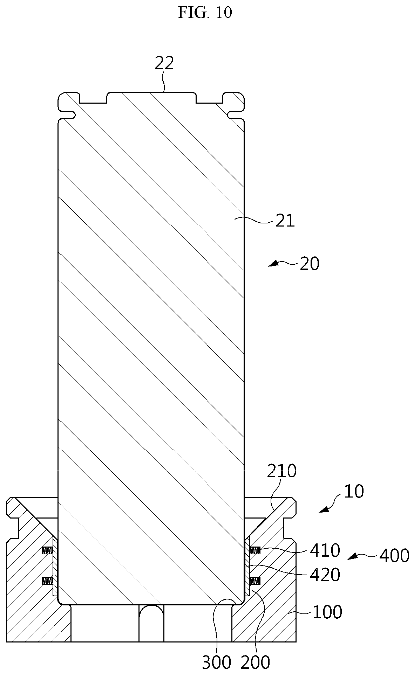

FIG. 10 is a cross-sectional view according to still another modified embodiment of a cylindrical battery cell cleaning carrier according to an embodiment of the present disclosure.

Referring to FIG. 10, the first support portion 200 may be provided with a gap removal portion 400 to remove the gap between the first support portion 200 and the cylindrical battery cell 20. The gap removal portion 400 may be configured in various ways, and may include, for example, an elastic portion 410 and a contact support portion 420.

The elastic portion 410 is coupled to the first support portion 200. The elastic portion 410 may include various types of configurations having elasticity, and may include, for example, various springs. For example, the elastic portion 410 may be provided as at least one coil spring, but is not limited thereto.

The contact support portion 420 is coupled to the elastic portion 410 and contacts the side surface of the cylindrical battery cell 20 to support the side surface of the cylindrical battery cell 20. Here, a coating layer may be formed on the contact support portion 420 to reduce friction when the cylindrical battery cell 20 is contacted.

The gap removal portion 400 may remove the gap due to machining errors or tolerances formed during the manufacturing process of the cleaning carrier 10. That is, since the cylindrical battery cells 20 may collide with or interfere with each other during the process of being seated in the cleaning carrier 10, a gap within a preset range may be formed to prevent this.

However, due to this gap, the cylindrical battery cell 20 may move within the cleaning carrier 10, and in this case, cleaning may become uneven. However, since the gap removal portion 400 is configured to remove the above-described gap while the contact support portion 420 contacts the side surface of the cylindrical battery cell 20 by the elastic force of the elastic portion 410 to support the side surface of the cylindrical battery cell 20, it is possible to prevent the cylindrical battery cell 20 from moving inside the cleaning carrier 10, thereby making cleaning uniform.

The contents common to those described in FIGS. 1 to 9 may also be applied to the embodiment of FIG. 10.

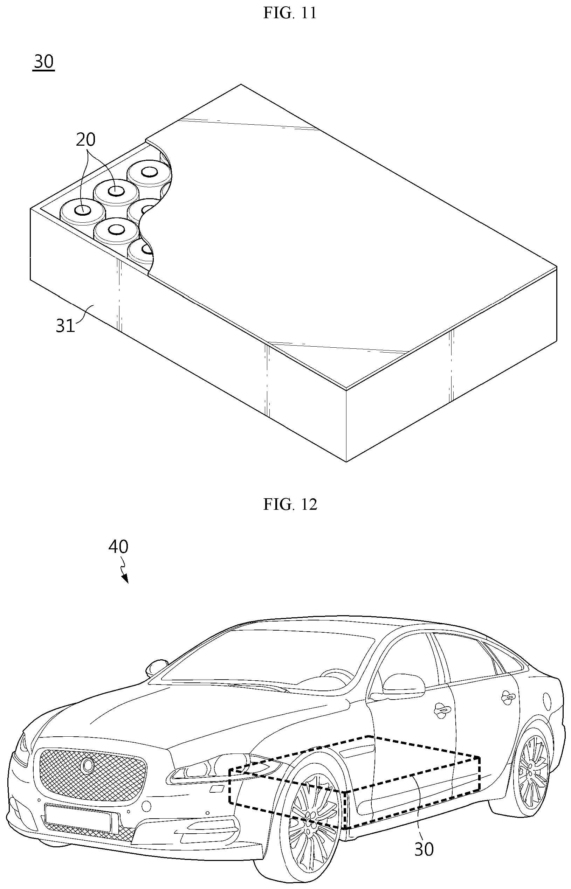

FIG. 11 is view schematically showing the configuration of a battery pack including cylindrical battery cells produced using a cylindrical battery cell cleaning carrier according to each embodiment of the present disclosure.

Referring to FIG. 11, a battery pack 30 according to an embodiment of the present disclosure may include one or more cylindrical battery cells 20. Here, the cylindrical battery cell 20 is produced using the cylindrical battery cell cleaning carrier 10 according to each embodiment of the present disclosure as described above.

In addition, the battery pack 30 may further include a pack housing 31 for accommodating the cylindrical battery cell 20, various devices for controlling charge/ discharge of the cylindrical battery cell 20, such as a BMS, a current sensor, a fuse, and the like.

FIG. 12 is a view for describing a vehicle including the battery pack of FIG. 11.

Referring to FIG. 12, a vehicle 40 according to an embodiment of the present disclosure may include one or more cylindrical battery cells 20 or battery packs 30. The cylindrical battery cell 20 is produced using the cylindrical battery cell cleaning carrier 10 according to each embodiment of the present disclosure as described above. And, the battery pack 30 may include one or more cylindrical battery cells 20 as described above.

Here, the vehicle 40 includes various vehicles designed to use electricity, such as electric vehicles or hybrid vehicles.

The terms indicating directions as used herein such as upper, lower, left, and right are used for convenience of description only, and it is obvious to those skilled in the art that the term may change depending on the position of the stated element or an observer.

While the present disclosure has been described hereinabove with reference to a limited number of embodiments and drawings, the present disclosure is not limited thereto and it is obvious to those skilled in the art that a variety of modifications and changes may be made thereto within the technical aspects of the present disclosure and the equivalent scope of the appended claims. Therefore, the embodiments disclosed above should be considered from an illustrative perspective rather than a limiting perspective. That is, the scope of the true technical idea of the present disclosure is shown in the claims, and all differences within the scope of equivalents should be construed as being included in the present disclosure.

### INDUSTRIAL APPLICABILITY

The present disclosure relates to a cylindrical battery cell cleaning carrier, a cylindrical battery cell produced using the same, and a battery pack and a vehicle including the cylindrical battery cell, and is particularly applicable to industries related to secondary batteries.

## Claims

1. A cylindrical battery cell cleaning carrier, which is a carrier where the cylindrical battery cell is seated during the transfer process to a cleaning member for cleaning the cylindrical battery cell, comprising:
a body portion in which the cylindrical battery cell is seated;
a first support portion protruding from the body portion and supporting the side surface of the cylindrical battery cell; and
a second support portion protruding from the body portion and supporting the bottom surface of the cylindrical battery cell.

2. The cylindrical battery cell cleaning carrier according to claim 1,
wherein at least one of the first support portions protrudes from the side surface of an inner circumferential portion of the body portion.

3. The cylindrical battery cell cleaning carrier according to claim 2,
wherein the first support portion is provided in four, and the four first support portions are spaced apart from each other at an interval of 90 degrees.

4. The cylindrical battery cell cleaning carrier according to claim 1,
wherein an inclined portion is formed on an upper side of the first support portion to facilitate seating of the cylindrical battery cell.

5. The cylindrical battery cell cleaning carrier according to claim 1,
wherein at least one of the second support portions protrudes from the lower side of an inner circumferential portion of the body portion.

6. The cylindrical battery cell cleaning carrier according to claim 5,
wherein the second support portion is coupled to the lower end of the first support portion.

7. The cylindrical battery cell cleaning carrier according to claim 5,
wherein the second support portion is provided in four, and the four second support portions are spaced apart from each other at an interval of 90 degrees.

8. The cylindrical battery cell cleaning carrier according to claim 1,
wherein a round portion is formed in the second support portion so as to facilitate the discharge of cleaning water used for cleaning the cylindrical battery cell.

9. The cylindrical battery cell cleaning carrier according to claim 8,
wherein the round portion is formed on the upper surface of the second support portion.

10. The cylindrical battery cell cleaning carrier according to claim 9,
wherein the round portion comprises:
a first curved portion formed in a curved shape from a first end of the upper surface toward the center of the upper surface; and
a second curved portion formed in a curved shape from a second end of the upper surface opposite to the first end toward the center of the upper surface,
wherein a straight portion in the form of a straight line connected to the first curved portion and the second curved portion, respectively, is formed at the center of the upper surface.

11. The cylindrical battery cell cleaning carrier according to claim 1,
wherein the second support portion comprises a plurality of unit supports,
wherein the plurality of unit supports are spaced apart from each other so as to facilitate the discharge of cleaning water used for cleaning the cylindrical battery cell, and a drain is formed in the spaced apart space of the plurality of unit supports.

12. The cylindrical battery cell cleaning carrier according to claim 1,
wherein the first support portion is provided with a gap removal portion to remove the gap between the first support portion and the cylindrical battery cell.

13. The cylindrical battery cell cleaning carrier according to claim 12,
wherein the gap removal portion comprises:
an elastic portion coupled to the first support portion; and
a contact support portion coupled to the elastic portion and contacting the side surface of the cylindrical battery cell.

14. A cylindrical battery cell produced using a cylindrical battery cell cleaning carrier according to any one of claims 1 to 13.

15. A battery pack comprising at least one cylindrical battery cell according to claim 14.

16. A vehicle comprising at least one cylindrical battery cell according to claim 14.
